(19) Europäisches Patentamt
European Patent Office
Office européen des brevets

(11) Numéro de publication : **0 454 554 B1**

(12) **FASCICULE DE BREVET EUROPEEN**

(45) Date de publication du fascicule du brevet :
**14.12.94 Bulletin 94/50**

(51) Int. Cl.$^5$ : **G02C 7/02**

(21) Numéro de dépôt : **91401055.8**

(22) Date de dépôt : **22.04.91**

(54) **Procédé pour faciliter la réalisation d'une lentille ophtalmique progressive, et lentille(s) ophtalmique(s) progressive(s) correspondante(s).**

(30) Priorité : **25.04.90 FR 9005277**

(43) Date de publication de la demande :
**30.10.91 Bulletin 91/44**

(45) Mention de la délivrance du brevet :
**14.12.94 Bulletin 94/50**

(84) Etats contractants désignés :
**AT CH DE ES GB IT LI NL**

(56) Documents cités :
**EP-A- 0 039 284
EP-A- 0 101 972
BE-A- 557 424
CH-A- 354 269
DE-A- 3 116 524
FR-A- 2 329 427
FR-A- 2 344 042
US-A- 3 687 528**

(73) Titulaire : **ESSILOR INTERNATIONAL, Cie Générale d'Optique
1 Rue Thomas Edison,
Echat 902
F-94028 Créteil Cédex (FR)**

(72) Inventeur : **Chauveau, Jean-Pierre
45 Rue Croulebarbe
F-75013 Paris (FR)**
Inventeur : **Deforges, Jean-Paul
133 Avenue Gilbert Berger
F-93290 Tremblay les Gonesses (FR)**
Inventeur : **Harsigny, Christian
8, Rue R. Brun
F-91130 Yerres (FR)**

(74) Mandataire : **CABINET BONNET-THIRION
95 Boulevard Beaumarchais
F-75003 Paris (FR)**

EP 0 454 554 B1

## Description

La présente invention concerne d'une manière générale les lentilles ophtalmiques progressives, c'est-à-dire les lentilles ophtalmiques dont une surface au moins, par exemple celle de la face avant, présente, suivant une partie au moins d'au moins un méridien, une courbure progressivement variable, en sorte que, le long de la partie concernée au moins de ce méridien, la puissance de l'ensemble varie elle-même de manière continue entre deux puissances, l'une correspondant à la vision de loin, l'autre correspondant à la vision de près.

En pratique, cette puissance résulte de la conjonction de celle due au dioptre concave et de celle due au dioptre convexe, tout se passant comme si, à une puissance de base, sphérique, communément dite base, et correspondant à la vision de loin, venait s'ajouter, en vision de près, une puissance additionnelle, communément dite addition, et, pour des raisons, notamment, de commodité de réalisation, cette réalisation se faisant par moulage entre deux coquilles entre lesquelles intervient annulairement un joint, l'ensemble est délimité par un bord de contour circulaire.

Le plus souvent, à ce jour, la surface à courbure progressivement variable d'une telle lentille ophtalmique progressive s'étend à pleine ouverture.

Autrement dit, elle s'étend jusqu'au bord de l'ensemble, qui est en pratique de contour circulaire, le long d'une partie au moins de ce bord.

Il en résulte que la dénivelée de ce bord par rapport à un plan de référence perpendiculaire à l'axe de géométrie de l'ensemble, c'est-à-dire la distance entre ce bord et ce plan, varie sur une partie au moins de son périmètre.

En pratique, l'épaisseur d'ensemble d'une lentille ophtalmique progressive est elle-même à ce jour variable le long de ce périmètre.

La réalisation d'une telle lentille ophtalmique progressive s'en trouve relativement compliquée.

En effet, pour cette réalisation, il importe que, pour être en mesure d'assurer toute l'étanchéité nécessaire à la cavité de moulage qu'il confine, le joint mis en oeuvre présente lui-même une épaisseur variable le long de son périmètre, au droit de la portée des coquilles correspondantes.

Il est dès lors, nécessaire, à ce jour, d'une part, de disposer d'un joint par addition, et, d'autre part, lors de l'assemblage de ce joint avec les deux coquilles qu'il entretoise, de respecter très exactement l'orientation angulaire qui doit être la sienne par rapport à celles-ci.

Il s'avère par ailleurs souhaitable que, pour son esthétique, une lentille ophtalmique progressive soit la plus plate possible, et que, pour le confort de l'usager, elle soit la plus légère possible, soit que, de puissance positive, son épaisseur au centre soit la plus faible possible, soit que, de puissance négative, ce soit son épaisseur le long de son bord périphérique qui soit ainsi la plus faible possible.

Pour un type très particulier de lentilles ophtalmiques progressives, c'est-à-dire, en pratique, pour des lentilles ophtalmiques progressives de forte puissance destinées aux aphaques, il a déjà été proposé, dans ce but, de limiter à la zone centrale d'une telle lentille ophtalmique progressive la surface présentant une courbure progressivement variable, et d'entourer, en continu, cette zone centrale, qui définit dès lors la zone optiquement utile de l'ensemble, d'une zone périphérique de raccordement se raccordant tangentiellement à cette zone centrale.

Mais, en pratique, dans les réalisations correspondantes, la zone périphérique de raccordement ainsi mise en oeuvre se raccorde à la zone centrale optiquement utile le long d'une courbe fermée qui, en projection sur un plan perpendiculaire à l'axe géométrique de l'ensemble, est de contour circulaire, elle est concave en chacun de ses points, et sa section radiale, c'est-à-dire sa section par un plan passant par l'axe géométrique de l'ensemble, est un arc de cercle dont le rayon est constant tout au long de son périmètre.

Il en résulte que, comme précédemment, il faut un joint par base et par addition, et que, également comme précédemment, ce joint doit être convenablement orienté lors de sa mise en place entre les deux coquilles qu'il a à charge d'entretoiser.

Le nombre de joints différents dont il faut disposer est donc relativement élevé.

La présente invention a d'une manière générale pour objet une disposition permettant au contraire de se satisfaire d'un nombre relativement réduit de joints et d'en simplifier la mise en oeuvre, et conduisant en outre à d'autres avantages.

De manière plus précise, elle a tout d'abord pour objet un procédé propre à faciliter la réalisation d'une lentille ophtalmique progressive dont une face au moins, dite ci-après par simple commodité face progressive, délimitée par un bord de contour circulaire, comporte, en continu, d'une part, une zone centrale, qui, présentant une courbure progressivement variable suivant une partie au moins d'au moins un méridien, en est la zone optiquement utile, et, d'autre part, entourant ladite zone centrale, une zone périphérique de raccordement se raccordant tangentiellement à cette dernière, ce procédé étant d'une manière générale caractérisé en ce que on module circonférentiellement en valeur et/ou en signe le rayon de courbure de la section radiale de la zone périphérique de raccordement que comporte la face progressive de manière à ce que, avant tout détourage de la lentille, le bord de cette face progressive soit en tout point sensiblement à égale distance d'un plan de référence perpendiculaire à l'axe géométrique de l'ensemble.

Ainsi, le joint à mettre en oeuvre pour la réalisation d'une telle lentille ophtalmique progressive est avantageusement sensiblement équi-épais tout au long de son périmètre.

Il en résulte qu'un même joint peut convenir au moulage de plusieurs lentilles ophtalmiques progressives de bases et/ou d'additions différentes, et que, pour couvrir l'ensemble de la gamme des bases et/ou des additions nécessaires, il suffit ainsi d'un nombre réduit de joints distincts.

Il en résulte, également, que, lors de la mise en place d'un tel joint entre deux coquilles, aucune orientation angulaire particulière n'est à respecter.

L'assemblage correspondant s'en trouve avantageusement facilité, et, si désiré, il peut aisément être automatisé.

La présente invention a également pour objet toute lentille ophtalmique progressive obtenue en application d'un tel procédé.

Cette lentille ophtalmique progressive est d'une manière générale caractérisée en ce que, sa face progressive comportant une zone périphérique de raccordement autour d'une zone centrale optiquement utile, le rayon de courbure de la section radiale de cette zone périphérique de raccordement est modulé circonférentiellement en valeur et/ou en signe, en sorte que, avant tout détourage, le bord de cette face progressive est en tout point sensiblement à égale distance d'un plan de référence perpendiculaire à l'axe géométrique de l'ensemble.

Outre les avantages qui, tel que succinctement exposé ci-dessus, en résultent pour sa réalisation, la configuration que présente ainsi une lentille ophtalmique progressive suivant l'invention conduit avantageusement à une amélioration de son esthétique, et, par une réduction de son épaisseur maximale, qu'il s'agisse de son épaisseur au centre ou de son épaisseur le long de son bord, à une réduction de son poids.

En pratique, la projection sur un plan perpendiculaire à son axe géométrique de la courbe fermée délimitant sa zone centrale optiquement utile est de forme ovale.

En pratique, également, cette courbe fermée est une ellipse dont le grand axe est horizontal en position d'utilisation, et, pour des lentilles ophtalmiques progressives correspondant à une même puissance de base, ce grand axe a même longueur pour l'ensemble de celles-ci.

La présente invention a donc encore pour objet un jeu de lentilles ophtalmiques progressives du genre considéré, caractérisé en ce que, les lentilles ophtalmiques progressives qui le constituent correspondant toutes à une même puissance de base, les ellipses délimitant, en projection sur un plan perpendiculaire à leur axe géométrique, la zone centrale optiquement utile de leur face progressive ont toutes un même grand axe tandis que le petit axe de ces ellipses varie de l'une à l'autre en fonction de leur addition.

Les objets de l'invention, leurs caractéristiques et leurs avantages, ressortiront d'ailleurs de la description qui va suivre, à titre d'exemple, en référence aux dessins schématiques annexés sur lesquels ;

la figure 1 est une vue en perspective d'une lentille ophtalmique progressive suivant l'invention ;

la figure 2 en est une vue en plan, suivant la flèche II de la figure 1 ;

les figures 3 et 4 en sont des vues en coupe axiale, suivant respectivement les lignes III-III et IV-IV de la figure 2 ;

la figure 5 en est, à échelle différente, et supposée développée à plat, une vue en coupe circonférentielle suivant le cercle C3 tracé en tirets sur la figure 2 ;

la figure 6 est une vue en coupe axiale du moule susceptible d'être mis en oeuvre pour la réalisation d'une lentille ophtalmique progressive suivant l'invention ;

les figures 7 et 8 sont des vues en plan qui, analogues à celle de la figure 2, se rapportent chacune respectivement à deux autres lentilles ophtalmiques progressives suivant l'invention.

Sur ces figures, on a supposé que la lentille ophtalmique progressive 10 suivant l'invention était brute de moulage, sans aucun détourage.

Elle se présente alors sous la forme d'un palet de contour circulaire, avec une face avant 11A globalement convexe et une face arrière 11B globalement concave.

L'une au moins des faces de cette lentille ophtalmique progressive 10, en l'espèce sa face avant 11A, qui, à l'image de l'ensemble, est délimitée par un bord 13A de contour circulaire, comporte, globalement, en continu, de manière connue en soi, d'une part, une zone centrale 14, qui, présentant une courbure progressivement variable suivant une partie au moins d'au moins un méridien, en pratique le méridien principal en position d'utilisation, en est la zone optiquement utile, et, d'autre part, entourant cette zone centrale 14, une zone périphérique de raccordement 15 se raccordant tangentiellement en tout point à cette dernière.

Ainsi qu'on le sait, le méridien principal d'une telle lentille ophtalmique progressive 10 est incliné du côté nasal d'environ 8 à 10° par rapport à la verticale en position d'utilisation.

L'autre des faces de la lentille ophtalmique progressive 10 suivant l'invention, et donc, en l'espèce sa face arrière 11B, est, par exemple, sphérique.

Soit R1 son rayon et soit A l'axe géométrique de l'ensemble.

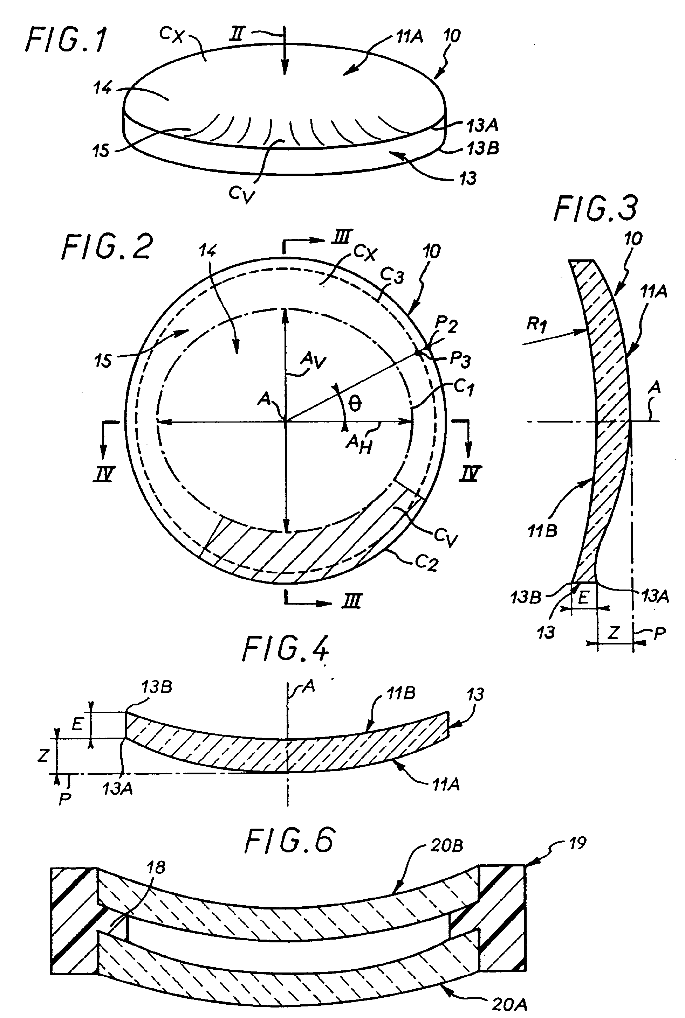

Cet axe géométrique A est schématisé par sa trace sur les figures 2, 7 et 8 et il est représenté en traits interrompus sur les figures 3 et 4.

Soit Z la dénivelée du bord 13A de la face avant 11A, ou face progressive, par rapport à un quelconque plan de référence P perpendiculaire à l'axe géométrique A, c'est-à-dire la distance, mesurée parallèlement à cet axe géométrique A, séparant, en un point quelconque, ce bord 13A de ce plan de référence P.

Par exemple, et tel que représenté en traits interrompus sur les figures 3 et 4, le plan de référence P est choisi tangent à la face avant 11A de la lentille ophtalmique progressive 10.

Soit, enfin, C1 la courbe fermée qui, comme schématisé en traits interrompus sur les figures 2, 7 et 8, délimite la zone centrale optiquement utile 14 de la face avant 11A, et, donc, en pratique, la zone centrale optiquement utile de l'ensemble.

Suivant l'invention, en projection sur un plan perpendiculaire à l'axe géométrique A de l'ensemble, et, par exemple, sur le plan de référence P, cette courbe fermée C1 est globalement de forme ovale, en étant en pratique dûment centrée sur l'axe géométrique A, et la zone périphérique de raccordement 15 que comporte la face avant 11A présente une section radiale, c'est-à-dire une section par un plan passant par l'axe géométrique A, dont le rayon de courbure $\underline{r}$ est modulé, circonférentiellement, en valeur et/ou en signe, tout autour de l'axe géométrique A, en sorte que, avant tout détourage, et tel que représenté, le bord 13A de cette face avant 11A est en tout point sensiblement à égale distance du plan de référence P.

Autrement dit, la dénivelée Z de ce bord 13A par rapport à ce plan de référence P est sensiblement constante tout au long de son périmètre.

De préférence, et tel que représenté, en projection sur le plan de référence P, la courbe fermée C1 est une ellipse dont le grand axe est horizontal pour la lentille ophtalmique progressive 10 supposée en position d'utilisation.

Quoi qu'il en soit, cette courbe fermée C1 est bien entendu en tout point à distance du bord 13A.

De préférence, enfin, la section radiale de la zone périphérique de raccordement 15 est, en tout point, une courbe de degré au moins égal à deux, qu'il s'agisse d'une courbe polynomiale ou qu'il s'agisse d'une courbe " B - spline".

Par exemple, il s'agit d'une parabole.

Pour la détermination de la face avant 11A de la lentille ophtalmique progressive 10 suivant l'invention, et indépendamment de sa zone centrale optiquement utile 14, dont la réalisation, connue par elle-même, ne relève pas de la présente invention, on peut, par exemple, procéder comme suit.

Soit R2 le rayon du cercle C2 qui définit le contour de cette lentille ophtalmique progressive 10 et suivant lequel se projette donc le bord 13A de sa face avant 11A.

Soit AH la longueur de l'axe horizontal de l'ellipse formant la courbe fermée C1, et soit AV la longueur de son axe vertical.

On se donne tout d'abord ces longueurs AH et AV, la longueur AH étant choisie pour correspondre à un champ horizontal maximal pour l'usager.

Eu égard, d'une part, à la puissance de base $P_b$, ou base, à obtenir, qui dépend de l'indice de réfraction $\underline{n}$ du matériau mis en oeuvre, et dont dépend le rayon R1 de la face arrière 11B, et, d'autre part, de la puissance additionnelle $P_a$, ou addition, à ajouter en vision de près à cette puissance de base $P_b$, on calcule, en un nombre N de points de l'ellipse retenue convenablement échelonnés le long de celle-ci, la direction de la normale à la face progressive correspondante.

Compte tenu de cette direction, et, compte tenu d'autres contraintes éventuellement à respecter, telles que par exemple un rayon de courbure minimal pour la section radiale à déterminer, lorsque celle-ci est concave, et/ou un pincement minimal de la lentille ophtalmique progressive 10 le long de son bord périphérique, c'est-à-dire un angle minimal entre les tangentes à la surface de sa face avant 11A et à celle de sa face arrière 11B dans un même plan radial, on calcule les paramètres de la parabole qui, tangente, dans la section radiale concernée, à la zone centrale optiquement utile 14 au point correspondant de celle-ci sur la courbe fermée C1, est susceptible de satisfaire à l'ensemble de ces contraintes, en procédant, si nécessaire, par itération.

Une fois cette parabole déterminée, on calcule la dénivelée Z au point correspondant du cercle C2.

On procède de même pour chacun des points retenus de l'ellipse formant la courbe fermée C1, et, par itération, on fait en sorte que la dénivelée Z obtenue soit toujours sensiblement la même.

Par itération, enfin, on fait en sorte que la longueur AV soit maximale.

Dans ce qui suit on supposera, à titre d'exemple, que le rayon R2 du cercle C2 définissant le bord périphérique de la lentille ophtalmique progressive 10 suivant l'invention est égal à 41 mm, que, après sa réalisation, cette lentille ophtalmique progressive 10 doit, pour des raisons commerciales, être détourée suivant un cercle C3 de rayon R3 égal à 38 mm, tel que schématisé en tirets sur la figure 2, avant sa mise sur le marché, et que la longueur AH de l'axe horizontal de l'ellipse formant la courbe fermée C1 qui en délimite la zone centrale optiquement utile 14 est choisie égale à 66 mm.

On supposera, également, à titre d'exemple I, que sa puissance de base $P_b$ est égale à 4,5 dioptries, et sa puissance additionnelle $P_a$ à 2,25 dioptries.

Le tableau T1 donne, pour un certain nombre de sections radiales, les caractéristiques de surface de la face avant 11A, progressive, d'une lentille ophtalmique progressive 10 obtenue suivant l'invention et répondant aux divers conditions précédentes.

En pratique, la longueur AV de l'axe vertical de l'ellipse formant la courbe fermée C1 délimitant sa zone centrale optiquement utile 14 est égale à 57 millimètres.

Dans ce tableau T1, en outre :
- $\Theta$ désigne en degrés, l'angle que fait, avec l'axe horizontal de l'ellipse formant la courbe fermée C1, le plan axial de la section radiale concernée ;
- $Z_{C2}$ désigne, en millimètres, la dénivelée, dans la section radiale concernée, du bord 13A, c'est-à-dire celle du point P2 de ce bord 13A contenu dans le plan axial correspondant ;
- $Z_{C3}$ désigne, dans les mêmes conditions, la dénivelée du point P3 du cercle C3 contenu dans ce plan axial ;
- $r_{C2}$ est, en millimètres, le rayon de courbure, au point P2, de la section radiale concernée ;
- et $r_{C3}$ est, dans les mêmes conditions, le rayon de courbure de cette section radiale au point P3.

Tableau T1

$P_a$ = 4,5 dioptries          $P_b$ = 2,25 dioptries

AV = 57 millimètres

rayon R2 du cercle C2 = 41 millimètres

rayon R3 du cercle C3 = 38 millimètres

| $\theta$ degrés | $z_{C2}$ | $z_{C3}$ | $r_{C2}$ | $r_{C3}$ |
|---|---|---|---|---|
| 0 | 7,41 | 6,34 | 111 | 111 |
| 10 | 7,41 | 6,36 | 126 | 126 |
| 20 | 7,41 | 6,42 | 195 | 195 |
| 30 | 7,41 | 6,47 | 316 | 316 |
| 40 | 7,41 | 6,51 | 451 | 452 |
| 50 | 7,41 | 6,54 | 579 | 579 |
| 60 | 7,41 | 6,57 | 771 | 771 |
| 70 | 7,41 | 6,59 | 1095 | 1095 |
| 80 | 7,41 | 6,60 | 1780 | 1780 |
| 90 | 7,41 | 6,61 | 2236 | 2236 |
| 100 | 7,42 | 6,61 | 1779 | 1779 |
| 110 | 7,41 | 6,59 | 1249 | 1249 |
| 120 | 7,41 | 6,56 | 773 | 773 |

| | | | | |
|---|---|---|---|---|
| 130 | 7,41 | 6,53 | 481 | 481 |
| 140 | 7,41 | 6,49 | 324 | 324 |
| 150 | 7,41 | 6,45 | 224 | 224 |
| 160 | 7,41 | 6,39 | 158 | 158 |
| 170 | 7,41 | 6,32 | 108 | 108 |
| 180 | 7,41 | 6,26 | 80 | 81 |
| 190 | 7,41 | 6,24 | 75 | 76 |
| 200 | 7,41 | 6,29 | 96 | 96 |
| 210 | 7,41 | 6,39 | 190 | 190 |
| 220 | 7,41 | 6,50 | 357431 | 357431 |
| 230 | 7,42 | 6,60 | - 297 | - 297 |
| 240 | 7,42 | 6,63 | - 199 | - 199 |
| 250 | 7,42 | 6,62 | - 230 | - 230 |
| 260 | 7,42 | 6,58 | - 382 | - 382 |
| 270 | 7,41 | 6,54 | - 651 | - 651 |
| 280 | 7,42 | 6,54 | - 646 | - 646 |
| 290 | 7,42 | 6,57 | - 339 | - 339 |
| 300 | 7,41 | 6,62 | - 185 | - 185 |

| 310 | 7,41 | 6,65 | − 147 | − 147 |
|-----|------|------|-------|-------|
| 320 | 7,41 | 6,63 | − 175 | − 175 |
| 330 | 7,42 | 6,56 | − 479 | − 479 |
| 340 | 7,41 | 6,46 | 515 | 515 |
| 350 | 7,41 | 6,37 | 154 | 154 |

Ainsi qu'on le notera, la dénivelée $Z_{C2}$ du bord 13A est, comme recherché, toujours sensiblement la même, à 0,01 mm près.

Ainsi qu'on le notera, également, la dénivelée $Z_{C3}$ le long du cercle C3 varie circonférentiellement en passant alternativement par des maximas et des minimas.

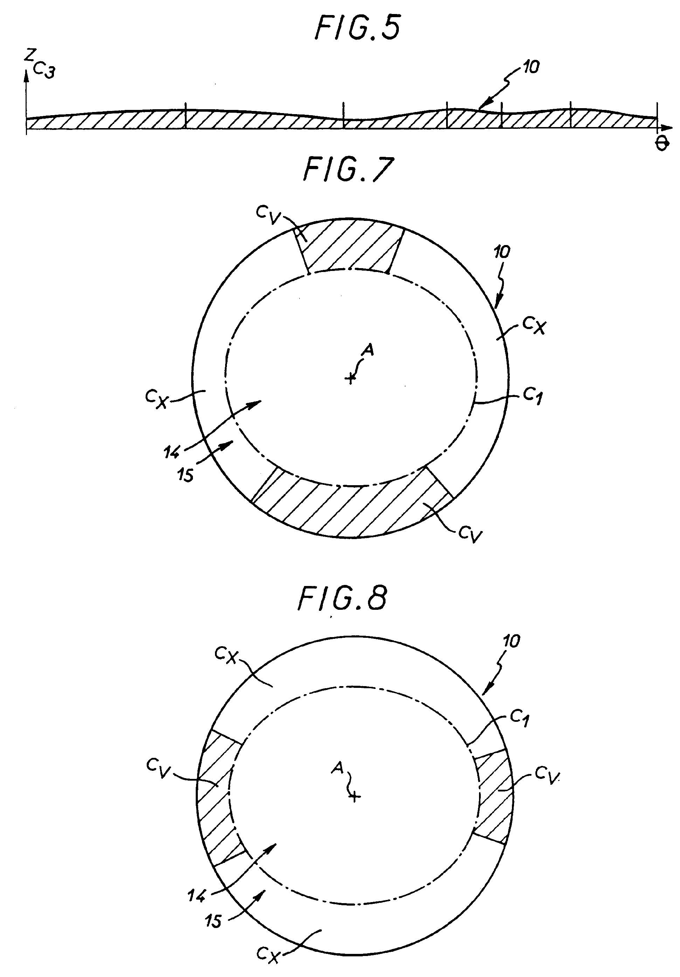

Tel qu'illustré par la courbe circonférentielle de la figure 5, sur laquelle on a porté en abscisses l'angle $\Theta$ et en ordonnées la dénivelée $Z_{C3}$, il en résulte, circonférentiellement, c'est-à-dire en circulant annulairement autour de l'axe géométrique A dans la zone périphérique de raccordement 15, un certain vallonnement de cette zone périphérique de raccordement 15.

Ainsi qu'on le notera, enfin, le rayon de courbure de la section radiale de cette zone périphérique de raccordement 15, qu'il soit pris sur le cercle C2 ou qu'il soit pris sur le cercle C3, varie, circonférentiellement, en valeur et en signe, autour de l'axe géométrique A.

Autrement dit, et ainsi qu'il est visible à la figure 3, cette zone périphérique de raccordement 15 est, suivant une caractéristique de l'invention, tantôt convexe, comme cela est le cas à la partie haute de cette figure 3, et tantôt concave, comme cela est le cas à sa partie basse.

Pour une illustration plus complète de cette caractéristique, on a laissé en blanc, sur la figure 2, la partie CX de la zone périphérique de raccordement 15 dans laquelle, le rayon de courbure de sa section radiale étant positif, cette zone périphérique de raccordement 15 est convexe, et on a hachuré la partie CV de cette zone périphérique de raccordement 15 dans laquelle, le rayon de courbure de sa section radiale étant négatif, elle est concave.

Il ressort de ce qui précède que, le long de son bord périphérique, désigné par la référence générale 13 sur les figures, la lentille ophtalmique progressive 10 suivant l'invention est sensiblement équi-épaisse.

Autrement dit, tout au long de ce bord périphérique 13, le bord 13A de la face avant 11A est à distance constante E du bord 13B de sa face arrière 11B.

Il en est dès lors avantageusement de même pour la lèvre 18 du joint 19 à mettre en oeuvre pour entretoiser les coquilles 20A, 20B nécessaires au moulage d'une telle lentille ophtalmique progressive 10.

Le moule correspondant, formé de ces coquilles 20A, 20B et de ce joint 19, est représenté isolément à la figure 6.

Relevant d'une constitution bien connue par elle-même, il ne sera pas décrit plus en détail ici.

Il sera simplement souligné que, la lèvre 18 de son joint 19 étant équi-épaisse, ce joint 19 peut avantageusement être disposé suivant une orientation angulaire quelconque par rapport aux coquilles 20A, 20B.

Il en résulte une avantageuse facilité de réalisation pour la lentille ophtalmique progressive 10 suivant l'invention.

Il en résulte, également, qu'un même joint 19 peut avantageusement convenir à toute une gamme de lentilles ophtalmiques progressives de puissance de bases $P_b$ et/ou de puissances additionnelles $P_a$ différentes.

Sur les figures 7 et 8 on a donné, à titre d'exemple II et III, et dans les mêmes conditions que sur la figure 2, deux autres exemples de lentilles ophtalmiques progressives 10 suivant l'invention.

Pour l'exemple II, figure 7, la puissance de base $P_b$ est de 4,5 dioptries, et la puissance additionnelle $P_a$ de 3,25 dioptries.

Pour l'exemple III, figure 8, la puissance de base $P_b$ est de 6 dioptries, et la puissance additionnelle $P_a$ de 2,25 dioptries.

Les tableaux T2, T3 suivants s'y rapportent chacun respectivement.

## Tableau T2

$P_a$ = 4,5 dioptries      $P_b$ = 3,25 dioptries

AV = 57 millimètres

rayon R2 du cercle C2 = 41 millimètres

rayon R3 du cercle C3 = 38 millimètres

| $\theta$ degrés | $z_{C2}$ | $z_{C3}$ | $r_{C2}$ | $r_{C3}$ |
|---|---|---|---|---|
| 0 | 7,74 | 6,53 | 71 | 71 |
| 10 | 7,74 | 6,58 | 84 | 85 |
| 20 | 7,73 | 6,68 | 145 | 146 |
| 30 | 7,74 | 6,77 | 296 | 296 |
| 40 | 7,74 | 6,83 | 565 | 565 |
| 50 | 7,74 | 6,88 | 1202 | 1202 |
| 60 | 7,73 | 6,92 | 8712 | 8712 |
| 70 | 7,73 | 6,95 | - 2313 | - 2312 |

| 80 | 7,75 | 6,98 | − 1571 | − 1571 |
| 90 | 7,75 | 6,98 | − 1184 | − 1184 |
| 100 | 7,73 | 6,97 | − 1775 | − 1775 |
| 110 | 7,75 | 6,96 | − 2310 | − 2310 |
| 120 | 7,73 | 6,92 | 444415 | 444415 |
| 130 | 7,73 | 6,88 | 1058 | 1058 |
| 140 | 7,74 | 6,82 | 444 | 444 |
| 150 | 7,73 | 6,75 | 235 | 235 |
| 160 | 7,73 | 6,66 | 131 | 130 |
| 170 | 7,73 | 6,54 | 77 | 78 |
| 180 | 7,73 | 6,43 | 54 | 55 |
| 190 | 7,73 | 6,39 | 50 | 50 |
| 200 | 7,73 | 6,47 | 64 | 65 |
| 210 | 7,74 | 6,63 | 130 | 130 |
| 220 | 7,73 | 6,79 | 1234 | 1234 |
| 230 | 7,74 | 6,91 | − 309 | − 309 |
| 240 | 7,75 | 6,87 | − 195 | − 195 |
| 250 | 7,75 | 6,96 | − 199 | − 199 |

| | | | | |
|---|---|---|---|---|
| 260 | 7,74 | 6,92 | − 270 | − 270 |
| 270 | 7,74 | 6,88 | − 382 | − 382 |
| 280 | 7,75 | 6,89 | − 361 | − 360 |
| 290 | 7,74 | 6,92 | − 222 | − 222 |
| 300 | 7,75 | 6,98 | − 148 | − 148 |
| 310 | 7,75 | 6,99 | − 138 | − 138 |
| 320 | 7,73 | 6,92 | − 217 | − 217 |
| 330 | 7,73 | 6,82 | 6883 | 6883 |
| 340 | 7,73 | 6,72 | 244 | 244 |
| 350 | 7,73 | 6,59 | 100 | 100 |

Tableau T3

$P_a$ = 6 dioptries          $P_b$ = 2,25 dioptries

AV = 60 millimètres

rayon R2 du cercle C2 = 41 millimètres

rayon R3 du cercle C3 = 38 millimètres

| θ degrés | $z_{C2}$ | $z_{C3}$ | $r_{C2}$ | $r_{C3}$ |
|---|---|---|---|---|
| 0 | 9,59 | 8,34 | 319 | 319 |
| 10 | 9,60 | 8,36 | 418 | 418 |
| 20 | 9,59 | 8,42 | 271915 | 271915 |

| | | | | |
|---|---|---|---|---|
| 30 | 9,60 | 8,47 | − 694 | − 694 |
| 40 | 9,59 | 8,50 | − 478 | − 478 |
| 50 | 9,59 | 8,53 | − 424 | − 424 |
| 60 | 9,61 | 8,56 | − 439 | − 439 |
| 70 | 9,60 | 8,58 | − 369 | − 369 |
| 80 | 9,60 | 8,60 | − 334 | − 334 |
| 90 | 9,60 | 8,60 | − 318 | − 318 |
| 100 | 9,59 | 8,59 | − 317 | − 317 |
| 110 | 9,60 | 8,58 | − 348 | − 348 |
| 120 | 9,60 | 8,56 | − 440 | − 440 |
| 130 | 9,60 | 8,52 | − 600 | − 600 |
| 140 | 9,60 | 8,48 | − 970 | − 970 |
| 150 | 9,59 | 8,44 | − 5735 | − 5735 |
| 160 | 9,60 | 8,39 | 687 | 687 |
| 170 | 9,60 | 8,33 | 262 | 262 |
| 180 | 9,60 | 8,26 | 155 | 156 |
| 190 | 9,59 | 8,24 | 135 | 136 |
| 200 | 9,60 | 8,28 | 183 | 183 |

| 210 | 9,59 | 8,38 | 1837 | 1837 |
|-----|------|------|------|------|
| 220 | 9,60 | 8,51 | − 208 | − 208 |
| 230 | 9,61 | 8,62 | − 110 | − 110 |
| 240 | 9,61 | 8,68 | − 87 | − 87 |
| 250 | 9,60 | 8,67 | − 90 | − 90 |
| 260 | 9,60 | 8,62 | − 109 | − 109 |
| 270 | 9,60 | 8,58 | − 130 | − 130 |
| 280 | 9,59 | 8,58 | − 126 | − 126 |
| 290 | 9,60 | 8,62 | − 103 | − 103 |
| 300 | 9,59 | 8,67 | − 80 | − 80 |
| 310 | 9,60 | 8,70 | − 73 | − 74 |
| 320 | 9,61 | 8,66 | − 87 | − 87 |
| 330 | 9,61 | 8,57 | − 135 | − 135 |
| 340 | 9,60 | 8,47 | − 327 | − 327 |
| 350 | 9,59 | 8,37 | 1065 | 1065 |

Ainsi qu'on le notera, la longueur AV de l'axe vertical de l'ellipse constituant la courbe fermée C1 délimitant la zone centrale optiquement utile 14 des lentilles ophtalmiques progressives 10 correspondantes varie à chaque fois, pour une même valeur, en l'espèce 66 mm, de la longueur AH du grand axe de cette ellipse.

Pour une même valeur de la puissance de base $P_b$, cette variation dépend de la seule addition.

Autrement dit, suivant une caractéristique de l'invention, pour un jeu de lentilles ophtalmiques progressives 10 correspondant toutes à une même puissance de base $P_b$, les ellipses délimitant en projection sur un plan perpendiculaire à leur axe géométrique leur zone centrale optiquement utile 14 ont toutes un même axe AH, c'est-à-dire une même longueur AH pour leur grand axe, tandis que le petit axe AV de ces ellipses, c'est-à-dire la longueur AV de leur petit axe, varie de l'une à l'autre en fonction de leur addition.

A titre indicatif, le tableau T4 donne ci-après la valeur de la longueur AV de ce petit axe pour des puissances

13

de base $P_b$ égales à 4,5 et 6 dioptries.

## Tableau T4

| $P_a$ dioptries | AV en mm | |
|---|---|---|
| | $P_b$ = 4,5 dioptries | $P_b$ = 6 dioptries |
| 075 | 61 | 64 |
| 100 | 60 | 64 |
| 125 | 59 | 63 |
| 150 | 58 | 62 |
| 175 | 58 | 61 |
| 200 | 57 | 61 |
| 225 | 57 | 60 |
| 250 | 56 | 59 |
| 275 | 56 | 58 |
| 300 | 55 | 57 |
| 325 | 54 | 56 |
| 350 | 54 | 55 |

Dans tous les cas, et les conditions étant égales par ailleurs, l'invention permet avantageusement un gain de poids pour ces lentilles ophtalmiques progressives 10, ainsi qu'une amélioration de leur esthétique.

Le tableau T5 ci-après en est une illustration.

Dans ce tableau T5 :
- e est, en millimètres, l'épaisseur au centre des lentilles ;
- p en est, en grammes, le poids ;
- $P_{VL}$ en est la puissance en vision de loin.

## Tableau 5

| $P_{VL}$ diop-tries | $P_a$ diop-tries | L1 | | | L2 | | |
|---|---|---|---|---|---|---|---|
| | | $P_b$ diop-tries | e mm | p gram-mes | $P_b$ diop-tries | e mm | P grammes |
| 0 | 2 | 5.00 | 23/10 | 12.00 | 4.50 | 20/10 | 9.70 |
| +3 | 2 | 7.00 | 75/10 | 30.23 | 6.00 | 46/10 | 14.54 |
| 0 | 3 | 5.00 | 33/10 | 16.16 | 4.50 | 20/10 | 8.95 |

Les lentilles L1 sont des lentilles réalisées conformément à l'art antérieur.

Les lentilles L2 sont, pour des caractéristiques équivalentes de puissance en vision de loin $P_{VL}$ et de puis-

sance additionnelle $P_a$, des lentilles réalisées en application de l'invention.

Ainsi qu'on le notera, leur épaisseur au centre e est largement inférieure, et leur poids également.

Globalement, un gain de poids de l'ordre de 50 % est obtenu.

Bien entendu, la présente invention ne se limite pas aux formes de réalisation décrites et représentées, ni aux exemples numériques donnés, mais englobe toute variante d'exécution.

En particulier, la face de la lentille ophtalmique progressive suivant l'invention opposée à sa face progressive n'est pas nécessairement sphérique.

En outre, cette face progressive n'en est pas nécessairement la face avant.

**Revendications**

1. Procédé pour faciliter la réalisation d'une lentille ophtalmique progressive dont une face (11A) au moins, dite ci-après par simple commodité face progressive, délimitée par un bord (13A) de contour circulaire, comporte, en continu, d'une part, une zone centrale (14), qui, présentant une courbure progressivement variable suivant une partie au moins d'au moins un méridien, en est la zone optiquement utile, et, d'autre part, entourant ladite zone centrale (14), une zone périphérique de raccordement (15) se raccordant tangentiellement à cette dernière, caractérisé en ce que on module circonférentiellement en valeur et/ou en signe le rayon de courbure de la section radiale de la zone périphérique de raccordement (15) que comporte la face progressive (11A) de manière à ce que, avant tout détourage de la lentille, le bord (13A) de cette face progressive (11A) soit en tout point sensiblement à égale distance d'un plan de référence (P) perpendiculaire à l'axe géométrique de l'ensemble.

2. Procédé suivant la revendication 1, caractérisé en ce que on choisit pour section radiale de la zone périphérique de raccordement (15) que comporte la face progressive (11A) une courbe de degré au moins égal à deux.

3. Procédé suivant la revendication 2, caractérisé en ce que on choisit pour section radiale de la zone périphérique de raccordement (15) que comporte la face progressive (11A) une parabole.

4. Procédé suivant l'une quelconque des revendications 1 à 3, caractérisé en ce que on délimite la zone centrale optiquement utile (14) de la face progressive (11A) par une courbe fermée (C1), qui, en projection sur un plan perpendiculaire à l'axe géométrique (A) de l'ensemble, est globalement de forme ovale.

5. Procédé suivant la revendication 4, caractérisé en ce que, en projection sur un plan perpendiculaire à l'axe géométrique (A) de l'ensemble, ladite courbe fermée (C1) est une ellipse dont le grand axe est horizontal en position d'utilisation.

6. Lentille ophtalmique progressive, du genre dont une face (11A) au moins, dite ci-après par simple commodité face progressive, délimitée par un bord (13A) de contour circulaire, comporte, en continu, d'une part, une zone centrale (14), qui, présentant une courbure progressivement variable suivant une partie au moins d'au moins un méridien, en est la zone optiquement utile, et, d'autre part, entourant ladite zone centrale (14), une zone périphérique de raccordement (15) se raccordant tangentiellement à cette dernière, caractérisée en ce que la zone périphérique de raccordement (15) que comporte sa face progressive (11A) présente une section radiale dont le rayon de courbure est modulé circonférentiellement en valeur et/ou en signe, en sorte que, avant tout détourage, le bord de cette face progressive (11A) est en tout point sensiblement à égale distance d'un plan de référence (P) perpendiculaire à l'axe géométrique (A) de l'ensemble.

7. Lentille ophtalmique progressive suivant la revendication 6, caractérisée en ce que, le long de son bord périphérique (13), elle est sensiblement équi-épaisse.

8. Lentille ophtalmique progressive suivant l'une quelconque des revendications 6, 7, caractérisée en ce que la section radiale de la zone périphérique de raccordement (15) que comporte sa face progressive (11A) est en tout point une courbe de degré au moins égal à deux.

9. Lentille ophtalmique progressive suivant la revendication 8, caractérisée en ce que la section radiale de la zone périphérique de raccordement (15) que comporte sa face progressive (11A) est en tout point une parabole.

10. Lentille ophtalmique progressive suivant l'une quelconque des revendications 6 à 9, caractérisée en ce que, en projection sur un plan perpendiculaire à l'axe géométrique (A) de l'ensemble, la courbe fermée (C1) délimitant la zone centrale optiquement utile (14) de sa face progressive (11A) est globalement de forme ovale.

11. Lentille ophtalmique progressive suivant la revendication 10, caractérisée en ce que, en projection sur un plan perpendiculaire à l'axe géométrique (A) de l'ensemble, ladite courbe fermée (C1) est une ellipse dont le grand axe est horizontal en position d'utilisation.

12. Jeu de lentilles ophtalmiques progressives suivant la revendication 11, caractérisé en ce que, les lentilles ophtalmiques progressives qui le constituent correspondant toutes à une même puissance de base, les ellipses délimitant en projection sur un plan perpendiculaire à l'axe géométrique (A) de l'ensemble la zone centrale optiquement utile (14) de leur face progressive (11A) ont toutes un même grand axe (AH) tandis que le petit axe (AV) de ces ellipses varie de l'une à l'autre en fonction de leur addition.

## Patentansprüche

1. Verfahren zur Vereinfachung der Herstellung einer progressiven ophthalmischen Linse, von der mindestens eine Fläche (11A), nachstehend einfach progressive Fläche genannt, welche durch einen Rand (13A) mit kreisrunder Kontur begrenzt ist, kontinuierlich umfaßt einerseits einen zentralen Bereich (14), der, eine progressiv variable Krümmung entlang mindestens eines Teils von mindestens einem Meridian aufweisend der optisch nützliche Bereich davon ist, und andererseits um den zentralen Bereich (14) herum einen peripherischen Anschlußbereich (15), der tangential an den anderen anschließt, dadurch gekennzeichnet, daß der Krümmungsradius des radialen Schnittes des peripherischen Anschlußbereiches (15), den die progressive Fläche (11A) aufweist, in Umfangsrichtung im Wert und/oder im Vorzeichen derart moduliert wird, daß vor jeglichem Beschneiden bzw. Bearbeiten der Linse der Rand (13A) dieser progressiven Fläche (11A) in jedem Punkt im wesentlichen einen gleichen Abstand von einer Bezugsebene (P) senkrecht zur geometrischen Achse der Gesamtheit aufweist.

2. Verfahren gemäß Anspruch 1, dadurch gekennzeichnet, daß als radialer Schnitt des peripherischen Anschlußbereiches (15), den die progressive Fläche (11A) aufweist, eine Kurve der Ordnung mindestens gleich zwei gewählt wird.

3. Verfahren gemäß Anspruch 2, dadurch gekennzeichnet, daß als radialer Schnitt des peripheren Anschlußbereiches (15), den die progressive Fläche (11A) aufweist, eine Parabel gewählt wird.

4. Verfahren gemäß einem der Ansprüche 1 bis 3, dadurch gekennzeichnet, daß der optisch nützliche zentrale Bereich (14) der progressiven Fläche (11A) durch eine geschlossene Kurve (C1) begrenzt wird, welche in Projektion auf eine Ebene senkrecht zur geometrischen Achse (A) der Gesamtheit, insgesamt eine ovale Form aufweist.

5. Verfahren gemäß Anspruch 4, dadurch gekennzeichnet, daß in Projektion auf eine Ebene senkrecht zur geometrischen Achse (A) der Gesamtheit, die geschlossene Kurve (C1) eine Ellipse ist, deren große Achse in Benutzungsposition horizontal ist.

6. Progressive ophthalmische Linse, bei der mindestens eine Fläche (11A), im folgenden einfach progressive Fläche genannt, welche durch einen Rand (13A) mit kreisrunder Kontur begrenzt ist, kontinuierlich umfaßt einerseits einen zentralen Bereich (14), der eine progressiv variable Krümmung entlang mindestens eines Teils mindestens eines Meridians aufweisend der optisch nützliche Bereich davon ist und andererseits um den zentralen Bereich (14) herum einen peripherischen Anschlußbereich (15), der sich tangential an den anderen anschließt, dadurch gekennzeichnet, daß der peripherische Anschlußbereich (15), den ihre progressive Fläche (11A) aufweist, einen radialen Schnitt umfaßt, dessen Krümmungsradius in Umfangsrichtung im Wert und/oder im Vorzeichen derart moduliert ist, daß vor jeglichem Beschneiden bzw. Bearbeiten der Rand dieser progressiven Fläche (11A) in jedem Punkt im wesentlichen einen gleichen Abstand von einer Bezugsebene (P) senkrecht zur geometrischen Achse (A) der Gesamtheit aufweist.

7. Progressive ophthalmische Linse gemäß Anspruch 6, dadurch gekennzeichnet, daß sie entlang ihres peripheren Randes (13) praktisch gleichdick ist.

**8.** Progressive ophthalmische Linse gemäß Anspruch 6 oder 7, <u>dadurch gekennzeichnet,</u> daß der radiale Schnitt des peripherischen Anschlußbereiches (15), den ihre progressive Fläche (11A) aufweist, in jedem Punkt eine Kurve der Ordnung mindestens gleich zwei ist.

**9.** Progressive ophthalmische Linse gemäß Anspruch 8, <u>dadurch gekennzeichnet,</u> daß der radiale Schnitt des peripherischen Anschlußbereiches (15), den ihre progressive Fläche (11A) aufweist, in jedem Punkt eine Parabel ist.

**10.** Progressive ophthalmische Linse gemäß einem der Ansprüche 6 bis 9, <u>dadurch gekennzeichnet,</u> daß in Projektion auf eine Ebene senkrecht zur geometrischen Achse (A) der Gesamtheit die geschlossene Kurve (C1), welche den optisch nützlichen zentralen Bereich (14) ihrer progressiven Fläche (11A) begrenzt, im allgemeinen eine ovale Form hat.

**11.** Progressive ophthalmische Linse gemäß Anspruch 10, <u>dadurch gekennzeichnet,</u> daß in Projektion auf eine Ebene senkrecht zur geometrischen Achse (A) der Gesamtheit die geschlossene Kurve (C1) eine Ellipse ist, deren große Achse in Benutzungsposition horizontal ist.

**12.** Satz progressiver ophthalmischer Linsen gemäß Anspruch 11, <u>dadurch gekennzeichnet,</u> daß, wobei die progressiven ophthalmischen Linsen, die ihn bilden, alle einer gleichen Basisbrechkraft entsprechen, die Ellipsen, welche in Projektion auf eine Ebene senkrecht zur geometrischen Achse (A) der Gesamtheit den optisch nützlichen zentralen Bereich (14) ihrer progressiven Fläche (11A) begrenzen, alle eine gleiche große Achse (AH) aufweisen, während die kleine Achse (AV) dieser Ellipsen von der einen zu der anderen in Abhängigkeit von deren Addition veränderlich ist.

## Claims

**1.** A process to facilitate the making of a varifocal lens, at least one face (11A) of which, hereinafter referred to as the varifocal face for the sake of simplicity, which is delimited by a rim (13A) of circular contour, comprises a continuous central zone (14), on the one hand, which has a gradually variable curvature along at least part of at least one meridian and which is the optically useful zone of the lens, and comprises a peripheral joining zone (15), on the other hand, which surrounds said central zone (14) and which is joined tangentially to this latter, characterised in that the bending radius of the radial section of the peripheral joining zone (15) provided on the varifocal face (11A) is modulated circumferentially in terms of value and/or sign in such a way that before the lens is trimmed in any way, the rim (13A) of the varifocal face (11a) is at a substantially equal spacing at every point from a reference plane (P) perpendicular to the geometric axis of the assembly.

**2.** A process according to Claim 1, characterised in that the radial section of the peripheral joining zone (15) provided on the varifocal face (11A) is selected in such a way that it has a degree of curvature at least equal to two.

**3.** A process according to Claim 2, characterised in that the radial section of the peripheral joining zone (15) provided on the varifocal face (11A) is selected as a parabola.

**4.** A process according to any one of Claims 1 to 3, characterised in that the optically useful central zone (14) of the varifocal face (11A) is delimited by a closed curve (C1) which is substantially oval in shape in projection over a plane perpendicular to the geometric axis (A) of the assembly.

**5.** A process according to Claim 4, characterised in that said closed curve (C1) is an ellipse whose large axis is horizontal in the position of use in projection over a plane which is perpendicular to the geometric axis (A) of the assembly.

**6.** A varifocal lens of the kind whose one face (11A) at least, hereinafter called the varifocal face for the sake of simplicity, which is delimited by a rim (13A) of circular contour comprises a continuous central zone (14), on the one hand, which has a gradually variable curvature along at least part of at least one meridian and which is the optically useful zone of the lens, and comprises a peripheral joining zone (15), on the other hand, which surrounds said central zone (14) and which is joined tangentially to this latter, characterised in that the peripheral joining zone (15) provided on its varifocal face (11A) has a radial section whose bending radius is modulated circumferentially in terms of value and/or sign in such a way that before any trimming is done the rim of this varifocal face (11A) is at an equal spacing at every point from a reference plane (P) perpendicular to the geometric axis (A) of the assembly.

7. A varifocal lens according to Claim 6, characterised in that along its peripheral rim (13) it is of substantially equal thickness.

8. A varifocal lens according to any one of Claims 6, 7, characterised in that the radial section of the peripheral joining zone (15) provided on its varifocal face (11A) at every point has a degree of curvature which is at least equal to two.

9. A varifocal lens according to Claim 8, characterised in that the radial section of the peripheral joining zone (15) provided on its varifocal face (11A) is a parabola at every point.

10. A varifocal lens according to any one of Claims 6 to 9, characterised in that in projection over a plane perpendicular to the geometric axis (A) of the assembly, the closed curve (C1) delimiting the optically useful central zone (14) of its varifocal face (11A) is substantially oval in shape.

11. A varifocal lens according to Claim 10, characterised in that in projection over a plane perpendicular to the geometric axis (A) of the assembly. said closed curve (C1) is an ellipse whose large axis is horizontal in the position of use.

12. A set of varifocal lenses according to Claim 11, characterised in that the varifocal lenses which constitute the set all correspond to one and the same base power, and the ellipses, which, in projection over a plane perpendicular to the geometric axis (A) of the assembly, delimit the optically useful central zone (14) of their varifocal face (11A), all have one and the same large axis (AH), whereas the small axis (AV) of these ellipses varies from one to the other as a function of their addition.

FIG.1

FIG.2

FIG.3

FIG.4

FIG.6

# FIG.5

# FIG.7

# FIG.8